# EUROPEAN PATENT APPLICATION

(11) **EP 2 495 166 A1**
(43) Date of publication of application: **05.09.2012**
(21) Application number: 11380015.5
(22) Date of filing: 03.03.2011
(51) Int. Cl.: B64C 39/02, H02G 1/02, H04N 7/18

(54) **Aerial robotic system for the inspection of overhead power lines**

(71) Applicant: Asociacion de la Industria Navarra (AIN), 31191 Cordovilla (Navarra ) (ES)
(72) Inventor: Vitoria Mangado, Teófilo, 31191 Cordovilla (ES); Valles Jimenez, Antonio, 31191 Cordovilla (ES); Alonso Marquez, Jorge, 31191 Cordovilla (ES); Estebanez, Santesteban, Roman, 31191 Cordovilla (ES); Armendariz Andueza, David, 31191 Cordovilla (ES); Garcia Aguillo, Luis, 31191 Cordovilla (ES)
(74) Representative: Carvajal y Urquijo, Isabel

(57) **Abstract**

Aerial robotic system for the inspection of overhead power lines comprising an aerial robot (1) and a ground station (2). The aerial robot (1) comprises a plurality of sensors (7), a camera system (6), a first communications systems (5), a flight control-system (4) which generates control signals for the control electromechanical system (3) based on the information it receives from the plurality of sensors (7) and of the first communications systems (5), and a control electromechanical system (3) which based on the control signals received from the flight control system (4) controls the vertical, lateral and longitudinal movement of the aerial robot (1). The ground station (2) comprises a second communications system (8), management means (9) and a user interaction module (10).

## Description

### Field of the invention

The present invention refers to the field of robotic systems comprising vision systems for the inspection and maintenance of overhead power lines.

### Background of the invention

Nowadays, the inspection of overhead power lines is performed, mostly, through conventional helicopters in which the inspection is performed by the crew. This procedure has two main inconveniences. On the one hand, the risks for the staff involved in the inspection, since the operation of the aerial system (helicopter and vision system involved operated by the staff) amidst the power lines is a task that involves considerable risks. The system has to operate at small height near electrical cables which are hard to see from the air by pilots. Accidents with human losses can frequently occur. On the other hand, the high cost of the system operation as a whole, helicopter and staff involved (pilot, mechanic, inspector and camera operator) is very high.

### Description of the invention

The line inspection system object of the present invention is based on an aerial robot with rotating wing (helicopter) with capacity for autonomous flight, maintaining a stable flight by itself. The aerial robot is capable of covering long sections of electrical lines for their visualization through on-board gyro-stabilized vision systems capable of obtaining image information (in different electromagnetic spectrum bands) with a quality equivalent to the one obtained through conventional methodology based on manned helicopters.

The present invention solves the existing limitations in the state of the art regarding the elimination of risks for staff and the reduction of the overhead power line inspection costs since it is a robotic system. The aerial robot substitutes the manned systems which require, at least, the involvement of three or four people on-board to perform the same task as the proposed invention.

The aerial robotic system for the inspection of overhead power lines is characterized in that it comprises:
● an aerial robot, formed by a mechanical structure with a main rotor for supporting said aerial robot and a tail rotor for compensating the torque reaction generated by the main rotor, comprising:
   o a plurality of sensors which instantaneously capture a plurality of parameters of the aerial robot navigation;
   o a camera system which acquires the video images comprising a gyro-stabilization system which eliminates the vibrations coming from the mechanical structure of the aerial robot and a pointing system which modifies the orientation of the camera system;
   o a first communications system which receives the routes established from a ground station and which transmits, to said ground station, the information provided by the camera system and the flight control system;
   o a flight control system which generates control signals for the control electromechanical system based on the information it receives from the plurality of sensors and from the first communications system;
   o a control electromechanical system which, based on the control signals it receives from the flight control system, controls the vertical, lateral and longitudinal movement of the aerial robot through the incidence angle variation of the blades of the main rotor and the tail rotor;
● the ground station comprises:
   o a second communications system which sends the information about the routes to be followed to the aerial robot and which receives the information coming from the camera system and the flight control system;
   o management means configured to manage the information coming from the second communications system and from the user interaction module;
   o a user interaction module which transfers the user commands to the system.

Preferably, the second communications system may comprise an antenna orientation device which modifies the orientation of the antennas of the second communications system.

Preferably, the user interaction module can comprise:
- a navigation monitoring and control unit which establishes the routes to be followed by the aerial robot;
- a teleoperation monitoring and navigation unit which receives the information coming from the flight control system;
- an inspection monitoring and control unit which receives the information from the camera system;
- an antenna orientation monitoring and control unit which controls the antenna orientation device.

Preferably, the flight control system will comprise a processing unit which will generate new position and speed instructions based on the information it receives from the navigation monitoring and control unit and from the plurality of sensors.

Preferably, this processing unit will be configured to generate an alarm when any parameter captured by the plurality of sensors is out of a predefined range.

Additionally, the plurality of navigation parameters of the aerial robot can comprise the position, speed and attitude including rolling and pitching angles and the angle with respect to the North of the aerial robot.

Preferably, the control electromechanical system comprises a plurality of servomechanisms, the positions of which determine the aerial robot situation and a conditioning module of the servomechanisms which condition the control signals sent by the flight control system. This control electromechanical system can be configured to transform the positions of the servomechanisms in different incidence angles of the blades of the main rotor and of the tail rotor.

The flight control system can be configured to perform an operation selected between:
- manual;
- automatic.

Preferably, the flight control system in manual mode will send as control signals the information received from the teleoperation monitoring and navigation unit if there is communication between the ground station and the aerial robot.

Preferably, the servomechanisms will comprise a storage unit which stores pre-established control signals which form the control signals when there is no communication between the ground station and the aerial robot, and the flight control system is in manual mode.

Preferably, the flight control system in automatic mode will send as control signals the information received from the processing unit. If there is communication between the ground station and the aerial robot, the control signals will be preferably configured for the aerial robot to follow a predetermined route. If there is no communication between the ground station and the aerial robot, the control signals will be preferably configured for the aerial robot to return to the starting point of the predetermined route.

The system is autonomous in terms of navigation since it is capable of maintaining stable flight even if communication with the ground station is lost, thanks to the flight control system, based on a microprocessor system, which works independently and autonomously. Also, it has redundant systems to secure a safe operation according to a navigation strategy incorporated in the system.

An additional navigation module enables the aerial robot to identify severe magnetic fields and accommodate its path to maintain a safe flight. To that end, the system uses a redundant magnetic field measurement system, which enables it to identify a saturation condition of the sensor which starts the activation of new position instructions, until reaching a condition within the measurement range of the sensors or the activation of a purely inertial attitude calculation mode, completely independent from the magnetic field measurement sensors.

Once the flight planning has been performed through the selection of the take-off and landing points, the inspection methodology comprises the following steps:
● automatic take-off from the ground station located near the line to be inspected
● approaching in autonomous flight the closest support
● real-time capturing and sending of the video signal of the images of the line to the ground station

● autonomous flight, in one direction, along the subsequent spans to obtain the video information of the supports
● return to the starting point and automatic landing thereon.

### Brief description of the drawings

The following is a brief description of a series of drawings which will help understand the invention better, relating to an embodiment of said invention which is presented as a non-limiting example thereof.
F igure 1 shows a scenario in which the invention is applied where its main components can be seen.
F igure 2 shows a functional block diagram of the whole system.

### Detailed description of an embodiment

The aerial robot 1 comprises a mechanical structure in which the rest of the mechanical elements are located: motor-power transmission system assembly, main rotor and tail rotor, as well as the control electromechanical system 3 for the vertical, lateral and longitudinal control of the aerial robot 1. The control electromechanical system 3 transforms the positions of the servomechanisms 11 in different incidence angles of the blades of the main rotor and the tail rotor. The servomechanisms 11 are managed through the servomechanism conditioning module 12. The servomechanism conditioning module 12 manages the origin of the control signal on the position of the servomechanisms 11:
- If there is communication between the ground station 2 and the aerial robot 1 and the ground station 2 sends the position of the servomechanisms 11 to the aerial robot 1:
   o if the flight control system (4) is in manual mode, the flight control is performed in a teleoperated manner from the teleoperation monitoring unit 15 of the ground station 2;
   o if the flight control system 4 is in automatic mode, the control is performed by the processing unit 13 of the flight control system 4.
- If there is no communication between the ground station 2 and the aerial robot 1 and the ground station 2 does not send the position of the servomechanisms 11 to the aerial robot 1:
   o if the flight control system 4 is in manual mode, pre-established positions in the servomechanisms 11 enable the aerial robot 1 to remain stable and slowly rise;
   o if the flight control system 4 is in automatic mode, the positions in the servomechanisms 11 are fixed by the flight control system 4 itself.

The processing unit 13 is a microprocessor system formed by several modules executed to maintain the stability of the aerial robot 1 while it follows the route sent by the ground station 2, taking into account the values of the data captured by the plurality of sensors 7.

The sensors 7 used in this embodiment are the following:
- Sensor of revolutions per minute for measuring the rotation speed of the main rotor;
- Gyroscopes to measure the angular speeds of the aerial robot 1 around axes X, Y and Z integral to the aerial robot 1;
- Linear accelerometers with respect to axes X, Y and Z integral to the aerial robot 1;
- Magnetometers to determine the terrestrial magnetic field, as well as the magnetic disturbances generated by the high voltage power line;
- GPS, to be able to determine the position and linear speeds of the aerial robot 1;
- Motor temperature sensor;
- Barometric sensor; to determine atmospheric pressure;
- Ultrasound sensor, to determine the distance to the ground.

Through the values detected by the sensors 7, the processing unit 13 calculates in real time the aerial robot 1 positions, speeds and linear and angular accelerations every instant, which are compared to the instructions. According to the errors calculated the processing unit 13 calculates the position of the servomechanisms 11 which will take the state of the aerial robot 1 to the instructions.

The term instructions refers to positions, speeds and linear and angular accelerations required to follow a predetermined route. A route comprises a take-off position, one or more passing points and a landing point. Also, at each passing point, the transition speed from one point to the other is specified.

The processing unit 13 has a series of emergency manoeuvres in case the aerial robot 1 detects anomalous situations.

With the measures of accelerometers, gyroscopes, magnetometers and GPS the rolling and pitching angles and the orientation angle of the aerial robot with respect to the magnetic North are calculated. At all times, the magnetic field read is analysed to be able to detect an anomaly, either in the calculation of the terrestrial magnetic field, or in the disturbance produced by the power line which could cause an incorrect calculation of the orientation angle with respect to the North, as well as in the rolling and pitching angles. The emergency manoeuvres include:
- Emergency rise: if an anomalous magnetic field is detected or a malfunctioning of the magnetometers, the magnetic field will not be used any more for the calculation of the aerial robot 1 state, and also, the route will be modified by means of an emergency rise to move the aerial robot 1 away from the source of disturbance, the power line.
- Return to home: in case the communication link is lost between the aerial robot 1 and the ground station 2 during a predefined period of time, the flight control system 4 is capable of autonomously decide to abort a pre-established route and return to the take-off point. This manoeuvre can also be commanded from the station.
- Emergency stop: from the ground station 2 it is possible to order the aerial robot 1 to make an emergency stop at any time in the position it is at said time.

The aerial robot 1 transports the camera system 6 which is used for the inspection of the component elements of the power line.

Between the communications systems 5, 8, there exists a data transfer through several channels and frequency in a redundant manner, so that if any of the channels and/or frequencies fails, communications are guaranteed. The data sent from the aerial robot 1 to the ground station 2 through the first and second communications systems 5, 8 are the following:
- state of the robot (positions, speeds, linear and angular accelerations),
- measurements of the sensors 7,
- intermediate calculations of the processing unit 13 of the flight control system 4,
- alarms generated by the processing unit 13 when:
   - the reading of a sensor is out of range,
   - no reading is received from any one sensor,
   - if the state of the aerial robot 1 (positions, speeds, linear and angular accelerations) is out of range.

That is, if there is a value detected or calculated which is out of the pre-established ranged, the processing unit 13 generates an alarm.
- positions of the servomechanisms 11,
- video signal captured by the camera system 6,
- teleoperation video signal captured by a camera located in the sensors 7.

The data from the ground station 2 to the aerial robot 1 through the second and first communications systems 8, 5 are the following:
- position of the servomechanisms 11,
- GPS differential corrections,
- orientation of the camera system 6 and control of the camera configurable parameters,
- navigation routes and commands,
- control and sensor 7 configurations.

The second communications system 8 comprises, besides the transmitters, receivers and antennas of the different frequencies used, an antenna orientation device 18 and a pole which attain greater directionality and visibility between the antennas of the first and second communications systems 5, 8.

Also, the antenna orientation device 18 has a camera 20 from which, the users of the antenna orientation control unit 14 of the user interaction module 10 can monitor at all times the direction to which the antennas of the ground station 2 are heading.

The processing means 9 of the ground station 2 process the data exchanged between the user interaction module 10 and the aerial robot 1.

The user interaction module 10 comprises four units:
- a navigation monitoring and control unit 14 which establishes the routes to be followed by the aerial robot 1;
- a teleoperation monitoring and navigation unit 15 which receives the information from the flight control system 4;
- an inspection monitoring and control unit 16 which receives the information from the camera system 6;
- an antenna orientation monitoring and control unit 19 which monitors the antenna orientation device 18 of the second communications systems 8.

Once the invention has been clearly described, it is highlighted that the particular embodiments described above can be modified in detail as long as the main principle and essence of the invention are not altered.

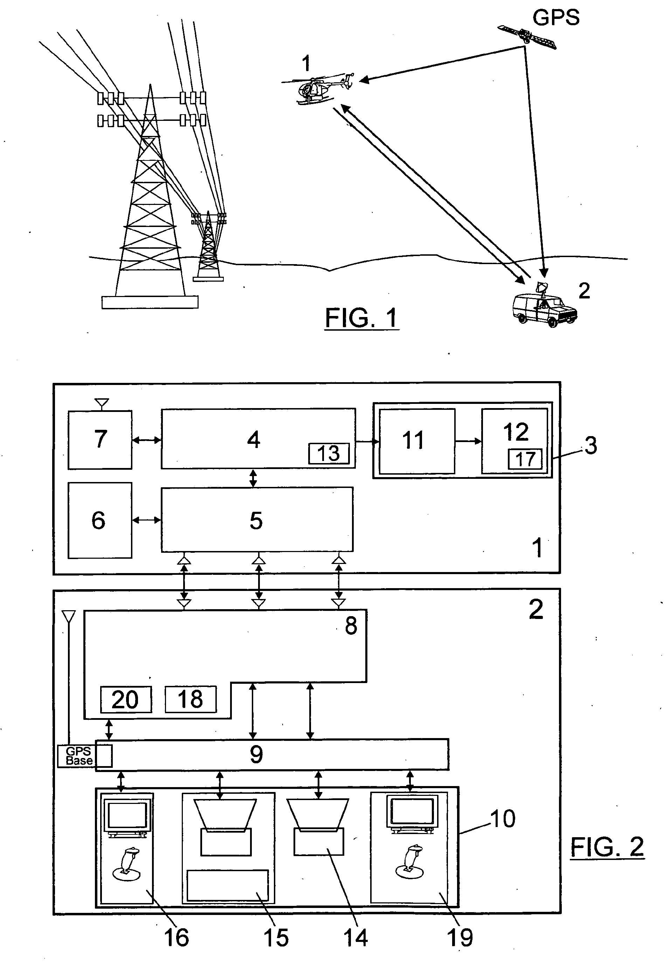

## Claims

1. Aerial robotic system for the inspection of overhead power lines **characterized in that** it comprises:
● an aerial robot (1), formed by a mechanical structure with a main rotor for supporting said aerial robot (1) and a tail rotor for compensating the torque reaction generated by the main rotor, comprising:
o a plurality of sensors (7) which instantaneously capture a plurality of parameters of the aerial robot (1) navigation;
o a camera system (6) which acquires video images comprising a gyro-stabilization system which eliminates the vibrations coming from the mechanical structure of the aerial robot (1) and a pointing system which modifies the orientation of the camera system (6);
o a first communications system (5) which receives the routes established from a ground station (2) and which transmits, to said ground station (2), the information provided by the camera system (6) and the flight control system (4);
o a flight control system (4) which generates control signals for the control electromechanical system (3) from the information it receives form the plurality of sensors (7) and from the first communications system (5);
o a control electromechanical system (3) which, based on the control signals it receives from the flight control system (4), controls the vertical, lateral and longitudinal movement of the aerial robot (1) through the incidence angle variation of the blades of the main rotor and the tail rotor;
● the ground station (2) comprises:
o a second communications system (8) which sends the information about the routes to be followed to the aerial robot (1) and which receives the information coming from the camera system (6) and the flight control system (4);
o management means (6) configured to manage the information coming from the second communications system (8) and from the user interaction module (10);
o a user interaction module (10) which transfers to the system the user commands.

2. Aerial robotic system for the inspection of overhead power lines, according to claim 1, **characterized in that** the second communications system (8) comprises an antenna orientation device (18) which modifies the orientation of the antennas of the second communications system (8).

3. Aerial robotic system for the inspection of overhead power lines, according to claim 2, **characterized in that** the user interaction module (10) comprises:
- a navigation monitoring and control unit (14) which establishes the routes to be followed by the aerial robot (1);
- a teleoperation monitoring and navigation unit (15) which receives the information coming from the flight control system (4);
- an inspection monitoring and control unit (16) which receives the information from the camera system (6);
- an antenna orientation monitoring and control unit (19) which controls the antenna orientation device (18).

4. Aerial robotic system for the inspection of overhead power lines, according to any of the preceding claims, **characterized in that** the flight control system (4) comprises a processing unit (13) which generates new position and speed instructions based on the information it receives from the navigation monitoring and control unit (14) and from the plurality of sensors (7).

5. Aerial robotic system for the inspection of overhead power lines, according to claim 4, **characterized in that** the processing unit (13) is configured to generate an alarm when any parameter captured by the plurality of sensors (7) is out of a predefined range.

6. Aerial robotic system for the inspection of overhead power lines, according to any of the preceding claims, **characterized in that** the plurality of navigation parameters of the aerial robot (1) comprise the position, speed and attitude including rolling and pitching angles and the angle with respect to the North of the aerial robot (1).

7. Aerial robotic system for the inspection of overhead power lines, according to any of the preceding claims, **characterized in that** the control electromechanical system (3) comprises a plurality of servomechanisms (11) whose positions determine the aerial robot (1) situation and a conditioning module of the servomechanisms (12), which condition the control signals sent by the flight control system (4).

8. Aerial robotic system for the inspection of overhead power lines, according to claim 7, **characterized in that** the control electromechanical system (3) is configured to transform the positions of the servomechanisms (11) in different incidence angles of the blades of the main rotor and of the tail rotor.

9. Aerial robotic system for the inspection of overhead power lines, according to any of the preceding claims, **characterized in that** the flight control system (4) is configured to perform an operation selected between:
- manual;
- automatic.

10. Aerial robotic system for the inspection of overhead power lines, according to claims 3 and 9, **characterized in that** the flight control system (4) in manual mode sends as control signals the information received from the teleoperation monitoring and navigation unit (15) if there is communication between the ground station (2) and the aerial robot (1).

11. Aerial robotic system for the inspection of overhead power lines, according to claims 7 to 9, **characterized in that** the servomechanisms (11) comprise a storage unit (17) which stores pre-established control signals which form the control signals when there is no communication between the ground station (2) and the aerial robot (1) and the flight control system (4) is in manual mode.

12. Aerial robotic system for the inspection of overhead power lines, according to claims 4, 5 and 9, **characterized in that** the flight control system (4) in automatic mode sends as control signals the information received from the processing unit (13).

13. Aerial robotic system for the inspection of overhead power lines, according to claim 12, **characterized in that** if there is communication between the ground station (2) and the aerial robot (1), the control signals are configured for the aerial robot (1) to follow a predetermined route.

14. Aerial robotic system for the inspection of overhead power lines, according to claim 12, **characterized in that** if there is no communication between the ground station (2) and the aerial robot (1), the control signals are configured for the aerial robot (1) to return to the starting point of the predetermined route.
